(19) **Europäisches Patentamt**
**European Patent Office**
**Office européen des brevets**

(11) **EP 1 208 659 B1**

(12) **EUROPEAN PATENT SPECIFICATION**

(45) Date of publication and mention
of the grant of the patent:
**27.02.2013 Bulletin 2013/09**

(51) Int Cl.:
***H04B 7/185*** (2006.01)

(21) Application number: **01939451.9**

(22) Date of filing: **23.05.2001**

(86) International application number:
**PCT/US2001/016987**

(87) International publication number:
**WO 2001/095522 (13.12.2001 Gazette 2001/50)**

(54) **RESOURCE ALLOCATION METHOD IN A SATELLITE DIVERSITY SYSTEM**

RESOURCENZUTEILUNGVERFAHREN IN EINEM SATELLITENDIVERSITYSYSTEM

PROCEDE D'ALLOCATION DE RESSOURCES POUR UN SYSTEME DE COMMUNICATION MULTI PLATES-FORMES

(84) Designated Contracting States:
**DE ES FR GB IT**

(30) Priority: **06.06.2000 US 587960**

(43) Date of publication of application:
**29.05.2002 Bulletin 2002/22**

(73) Proprietor: **The DIRECTV Group, Inc.**
**El Segundo, CA 90245 (US)**

(72) Inventors:
• **YUNG, Kar, W.**
**Torrance, CA 90503 (US)**

• **HAGEN, Frank, A.**
**Palos Verdes Estates, CA 90274 (US)**
• **CHANG, Donald, C., D.**
**Thousand Oaks, CA 91360 (US)**

(74) Representative: **Steil, Christian et al**
**Witte, Weller & Partner**
**Postfach 10 54 62**
**70047 Stuttgart (DE)**

(56) References cited:
**EP-A- 0 682 416       US-A- 5 592 471**
**US-A- 5 867 109**

**Description**

**Cross-Reference To Related Applications**

The present application is a continuation-in-part of assignee's co-pending U.S. Serial No. 09/271,997, entitled "Multiple Satellite Mobile Communications Method and Apparatus for Hand-Held Terminals," filed on March 18, 1999.

**Technical Field**

The present invention relates generally to a wireless communication system. More specifically, the present invention relates to a resource allocation technique for a multi-platform wireless communication system that provides improved utilization of total system resources to achieve maximum system utility.

**Background Art**

Current mobile satellite communication systems, such as Iridium, Globalstar, and ICO, utilize low-cost user terminals as one of their key system features. To maintain communications linkage with these current mobile systems, the system satellites provide multiple beam and high-gain services to the subscribers. The low-cost and low-gain hand-held terminals utilized by the users of these systems, transmit and receive signals to and from high performance satellites which populate almost the entire hemisphere. Some of these current systems require access to at least two satellites to assure a soft hand-over process as the satellites progress from horizon to horizon. As a result, the satellite system becomes more reliable and available as more satellites come into a user's field of view (FOV). The satellite constellations provided by these current systems are thus sized to guarantee a minimum number of satellites within a user's FOV over large coverage areas at all times.

All of these current mobile satellite communication systems, however, suffer from certain disadvantages. First, they all have limited frequency (the term "frequency" is generalized herein to refer to frequency, time slot or CDMA code) resources. Any given frequency over a given ground position can only be utilized by one user at a time. Thus, if one user accesses a satellite using a particular frequency slot to communicate to his counterpart on network, other satellites and/or users in the same region cannot reuse the same frequency resource in the same local area. In particular, if a nearby secondary user has a handset that requires the same frequency resources as is being utilized by the first user, the second user is unable to access the system, even via different satellites. This is true regardless of the sophistication of the system, including systems that utilize multiple beam satellite designs. Even when multiple satellites are available at a given geographic location, the same frequency spectrum cannot be used by more than one user in a local area. The availability of multiple satellites merely serves to increase the availability of the system to the user. However, the total capacity of these mobile communication satellite systems is still limited by their inefficient usage of the available frequency resources. Thus, the potential growth of these current satellite communication systems is inherently limited.

Additionally, current telecommunications systems generally allow only mobile-to-hub and hub-to-mobile communications in most low earth orbit and medium earth orbit mobile satellite constellations. Mobile-to-mobile linkages require multiple hops between hubs. This means that two or more frequency resources must be committed by the system to close the links.

It is clearly desirable to provide a mobile communication satellite system that relaxes the above constraints, and more efficiently utilizes current mobile satellite communication system resources, while also providing much greater opportunity for system growth.

The document US 5,867,109 entitled "Satellite Repeater Diversity Resource Management System" discloses a satellite communications system having a controller for improving and optimizing the delivery of path diversity in a satellite repeater-based communication system, thereby conserving both FDM channels and satellite power utilization. The reception of communications is improved, when one or more orbiting satellite repeater transmitters is blocked or severely faded, by recognizing the need for satellite path diversity on a real-time or near real-time basis. A user terminal is thus enabled to receive sufficient signal strength to avoid having an ongoing call automatically terminated. The system optimizes satellite path diversity applied to (a) classes (types) of user terminals and/or (b) to individual user terminals as a function of location and also a local RF propagation environment of the user terminal. In addition, a consideration is made of the satellite resources that are available at any given point in time, and may restrict or limit the availability of satellite path diversity, thereby increasing overall system capacity.

**Summary of the Invention**

It is an object of the present invention to provide a wireless communication system with reduced limitations on frequency re-use for point-to-point communications.

It is another object of the present invention to provide a wireless communication system that utilizes individual transponders and mobile terminals that are relatively simple and of low complexity.

It is a further object of the present invention to provide a wireless communication system with high system reliability through graceful degradation.

It is still another object of the present invention to provide a multi-transponder wireless communication system that allows flexible combination of user types.

It is a related object of the present invention to provide a multi-transponder wireless communication system with better utilization of total system resources.

It is yet a further object of the present invention to provide a resource allocation technique for a multi-platform system that maximizes the total monetary return.

In accordance with the above and other objects of the present invention, a multi-platform wireless communication system is provided. The wireless communication system includes a plurality of individual communication transponding nodes. The plurality of individual transponding nodes are each in communication with a ground hub such that a signal processed by the ground hub in the forward link is radiated with compensating time delays to one or more of the plurality of individual transponders. The radiated signals are then re-radiated by the plurality of individual transponders and coherently received and processed by a mobile user terminal. The return link signal path is the reverse of the forward link.

In accordance with another object of the present invention, the system includes a plurality of individual transponding nodes. The system also includes a plurality of individual resource cells, each associated with a particular one of the plurality of individual transponding nodes and a particular one of the plurality of available codes. The system further includes a plurality of mobile terminals of different types, each of which is assigned to operate in one or more of the plurality of individual resource cells. Each of the plurality of mobile terminals is assigned a profit value. A central hub establishes a link with one or more of the plurality of mobile terminals and assigns one or more resource cells and also assigns a profit value to each of the plurality of mobile terminals.

These and other features of the present invention will become apparent from the following description of the invention, when viewed in accordance with the accompanying drawings and appended claims.

**Brief Description of the Drawings**

FIGURE 1 is a schematic illustration of the forward link geometry of a mobile satellite communications system in accordance with the present invention;

FIGURE 2 is a schematic block diagram illustrating the signal transmission function of a ground telecommunications hub for a wireless communications system in accordance with a preferred embodiment of the present invention;

FIGURE 3 is a schematic illustration of the return link geometry of a wireless communications system in accordance with a preferred embodiment of the present invention;

FIGURE 4 is a schematic block diagram illustrating the signal receive function of a ground telecommunications hub for a wireless communications system in accordance with a preferred embodiment of the present invention;

FIGURE 5 is a schematic flow diagram illustrating the overall architecture for a wireless communications system in accordance with a preferred embodiment of the present invention;

FIGURE 6 is a schematic illustration of a multi-transponder wireless communication system illustrating signals being received coherently by their intended remote user;

FIGURE 7 is a schematic illustration of the multi-transponder wireless communication system of Figure 6 illustrating the same signals being received incoherently by a remote non-intended user;

FIGURE 8 is a schematic illustration of a conventional approach to an asynchronous CDMA system that may be utilized in accordance with the present invention;

FIGURE 9 illustrates a preferred embodiment of the present invention applied to the asynchronous CDMA system of Figure 8;

FIGURE 10 is a schematic diagram illustrating the reception of matched filtered signals arriving from multiple transponder nodes in accordance with the preferred CDMA system of Figure 9; and

FIGURE 11 is a schematic diagram illustrating an exemplary distribution of users in platform-code space for a multiple platform system in accordance with a preferred embodiment of the present invention.

**Best Mode(s) for Carrying Out the Invention**

Referring now to the figures, the disclosed mobile communication system can be utilized to break away from the frequency spectrum limitation discussed above and provide much more efficient means to re-use the allocated mobile satellite and wireless spectrum multiple times. By eliminating this frequency spectrum limitation on the operation of multiple satellites, the overall capacity of existing mobile satellite and wireless communication systems can more readily expand.

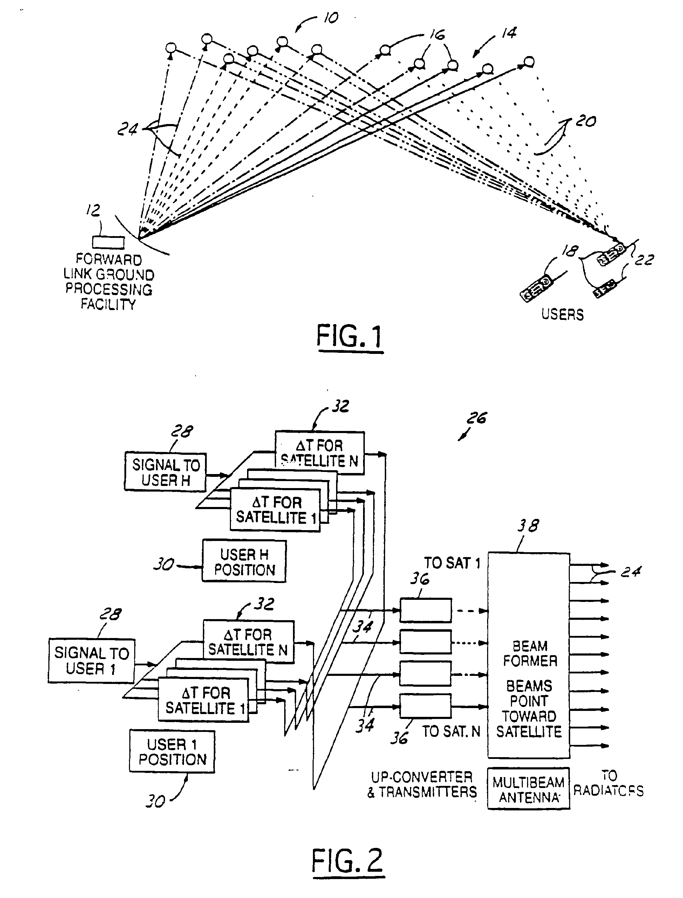

Referring now to Figure 1, a mobile satellite communication system 10 in accordance with a preferred embodiment of the present invention is illustrated. In Figure 1, the mobile satellite communications system 10 is illustrated in a forward link mode. The mobile satellite communications system 10 includes a ground telecommunications hub 12, a satellite constellation 14 including a plurality of individual satellites 16, and a plurality of hand-held user terminals 18 such as mobile phones. As discussed in more detail below, the user terminals 18 can receive signals 20 simultaneously from multiple satellites 16 via their broad beam antennas 22. The ground telecommunications hub 12 is in communication with all of the satellites 16 in the satellite constellation 14 individually and simultaneously. The hub 12 also pre-processes user signals to compensate for path differentials before sending radiated signals 24 to the satellites 16, as discussed in more detail below.

In accordance with the preferred embodiment, the design of the individual satellites 16 can be significantly simplified over those utilized in prior mobile systems because the satellite constellation 14 functions as a sparse radiating array. It is known that the more satellites 16 that are included in a satellite constellation 14, the better the performance the mobile satellite communications system 10 will achieve. Satellites that are simple, small, and provide high performance are preferable. This is because the performance of the system 10 depends more heavily on the satellite constellation 14 than on the individual satellites 16.

In a transmit mode, shown in Figure 1, the individual satellites 16 radiate modulated RF power to a chosen field of view ("FOV"). The system 10 is still operable with reduced capacity and no reconfiguration even if one individual satellite 16 is lost for any reason. As a result, the system 10 features graceful degradation characteristics and provides very high reliability and availability. Most of the complexity of the system 10 is located in the ground hubs 12, which locate and track the potential users and perform the major functions of beamforming and filtering, as discussed below.

As shown in Figure 2, the processing performed at the ground telecommunications hub 12 is diagrammatically illustrated. The hub 12 tracks, updates, and forward predicts the time variant differential information among various paths between the hub 12 and the intended user terminals 18. The accuracy of this information must be within a tenth of an RF wavelength. For UHF satellite systems, the required path differential accuracy is preferably about ten (10) centimeters. For L and S band mobile satellite constellations, the accuracy must be on the order of one (1) centimeter. Unfortunately, the conventional or GPS techniques are not able to provide the required accuracy.

In accordance with the present invention, the required accuracy of the equivalent path differentials, including all propagation distortion, can be provided using two-way active calibration and R2N (two-way ranging navigation) techniques. An R2N technique is just one technique for obtaining positioning information by which to locate the positioning of the satellites and users precisely using multiple calibration sites and is described in co-pending U.S. Patent Application Serial No. 09/209,062, entitled "Method and System for Determining a Position of a Transceiver Unit Incorporating Two-Way Ranging Navigation as a Calibration Reference for GPS," and filed on December 10, 1998. Other known techniques may also be utilized.

The ground telecommunications hub 12 has a processing center 26 that processes each signal and is shown in a transmit mode in Figure 2. The hub 12 has the capability to address the plurality of satellites 16 individually through the use of antenna spatial discrimination to provide separate signals to different satellites. Alternatively, code identification can also be used to address different satellites independently.

As shown in Figure 2, assuming that there are "H" users, the signals from user 1 to user H, identified generally by reference number 28, are input into the processing center 26. The position of the various users (1 to H), are determined generally by the circuitry from the various user signals 28, designated by reference number 30. The various user signals 28 for user 1 to user H are then combined for transmission to the different satellites 16, as generally indicated by reference number 32. In this case, the signal is sent to N satellites. The combined signals are then amplified, filtered, up converted, and then further amplified, as generally indicated by reference number 36. These signals are then delivered to a multiple beam antenna 38 where beam-forming processing is done so that the signals can be transmitted to the N satellites via radiating signals 24. The beam-forming process can be done in baseband or a low IF frequency band by either digital or analog means. For a low bandwidth (less than a few MHz signals), digital implementation can provide cost advantages.

The processed signal 24, radiated from the ground hub 12 to each satellite, is amplified, filtered, and then re-radiated by each of the multiple satellites 16 to arrive at a designated user location simultaneously. Consequently, the radiated signals from the multiple satellites will be received coherently by a broad beam antenna 22 of a simple hand held terminal.

Equivalently, the effect of the spatial processing performed by the processing center 26 is to focus signal strength on the user from multiple satellites 16, which act like sparsely separated portions of a large active reflector. Therefore, the processing on the ground will insert different time delays into the signals 24 which are radiated via various paths. The time delays will be inserted into the signals 24 as if the satellites were located on an ellipsoidal surface, of which the two foci are located exactly at the hub 12 and the designated user 18 positions respectively. In low and middle earth orbit constellations, the users 18 and the hub 12 will always be in the near field of the sparse array.

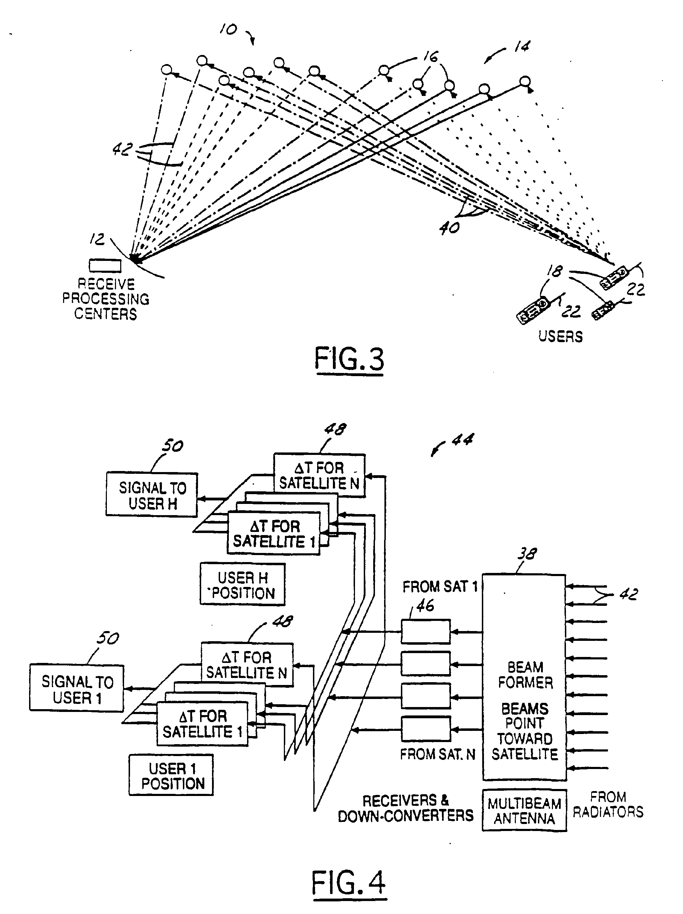

In a receive mode, shown in Figure 3, the individual satellites 16 collect RF signals from the same FOV. Figure 3 illustrates the return link geometry for receiving signals sent from the user terminals 18 to the ground telecommunications hub 12. As shown in Figure 3, there are two groups of links (signals) involved: the links between users 18 and the satellites 16, generally indicated by reference number 40, and those between the satellites 16 and the hub 12, as generally indicated by reference number 42. For best performance, the user antennas 22 preferably are able to illuminate all the satellites 16 involved. This will lead to a constraint on the variation of the gain of the user antenna 22 over the cluster.

As with the forward link geometry, the satellites 16 will amplify the signals 40 received from the users 18 and re-radiate the signals 42 toward the hub 12. The hub 12 can receive signals 42 independently, but simultaneously from the satellites 16, and will add the signals 42 from different satellites coherently in the post-processor 44 as illustrated in Figure 4.

The signal flows on the block diagram shown in Figure 4 illustrate the receive function of the post-processor 40 and the hub 12. The signal flows are reversed from the corresponding ones in Figure 2. Therefore the receive process will not be reiterated in detail. However, the links 42 from the satellites 16 to the hub 12 are received at the beamformer 38 and then transferred to the receiver and down converters 46 before the signals are separated. The signals are separated depending upon the user from which they are received, as generally indicated by reference number 48, and then sent to the specific user 1 through H, as generally indicated by reference number 50. It should be understood that both the receive and transmit function are a necessary part of the pathlink calibration and user positioning.

The technique of the present invention has been demonstrated to significantly reduce the average side lobe levels. It has been determined that this is due to three factors. First, the proposed architecture is not a periodic array, but rather a randomly spaced sparse array, which has no grating lobes. Although the average side lobe level at a single frequency is relatively high, the level decreases with increasing bandwidth. Second, the large sparsely filled array formed by moving satellites is a large extended aperture size. Thus, all of the users on the ground are in the near field of the extended aperture and the wave fronts received by all users are spherical instead of planar. Consequently, dispersion effects become much more pronounced than would be the case in the far field. The dispersion grows very fast as a probe is scanned away from the main beam and the dispersion smears the power distribution very effectively over a finite signal bandwidth. Third, the communication system is preferably designed with a large frequency bandwidth spectrum. The information signal will therefore be spread over this bandwidth via CDMA or through short duration waveforms for TDMA schemes.

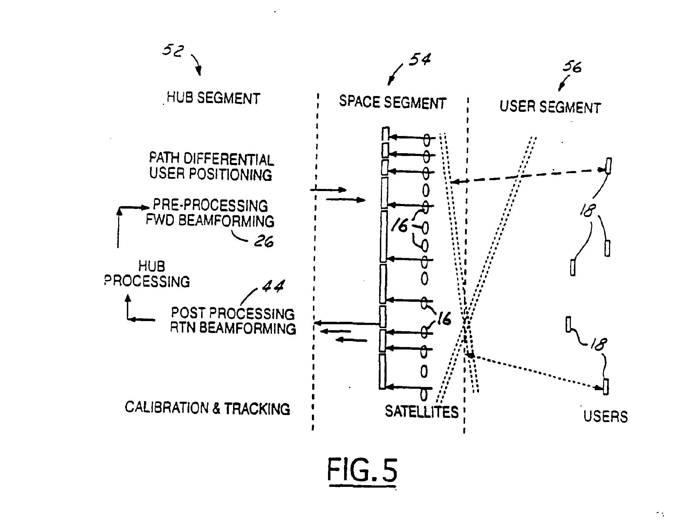

Figure 5 illustrates diagrammatically the operation of the invention, which allows for the increased re-use of precious frequency spectrum by multiple satellites. The advantages provided by this system include no limitation on frequency re-use by additional satellites for point-to-point communications. Rather, the capacity of this system is only limited by total satellite RF power. Further, the preferred embodiment allows for the use of simple and low cost satellite designs, because the more satellites included in the constellation, the better the performance of the overall system. The system also provides high system reliability through graceful degradation, as well as concentrating complex processing at the hubs.

The preferred embodiment creates demand for a large number of low cost satellites and also uses R2N techniques to perform satellite and user positioning. The more users using this system, the more accurately the satellite and user positions can be determined. However, even more important than the actual positions of the users and satellites are the path lengths traversed by the signals. Therefore, periodic calibration techniques applied directly to those path lengths may be much simpler and more cost effective. Further, the system also benefits from large percentage bandwidths available with CDMA and TDMA systems.

As shown in Figure 5, the present invention is divided up into three segments: a hub segment 52 containing the ground telecommunications hub 12, a space segment 54 containing a plurality of individual satellites 16, and a user segment 56, having a plurality of user terminals 18. The hub segment also has a processing center 26 and a post-processor 44 for processing the received and transmitted signals.

The user terminals 18 receive and transmit signals simultaneously from/to multiple satellites 16 via their broad beam antennas. The user terminals 18 do not require any capability to separately address the individual satellites 16 of the space segment 54. The hub 12 maintains links with each of the satellites 16 in the space segment 54 individually and simultaneously. The hub 12 pre-processes the signals intended for each remote user on transmission and post-processes the signals supplied to each local user on reception to compensate for path differentials. These corrections are separately computed and applied to the signals transmitted to or received from each satellite 16 of the space segment 54 for each user.

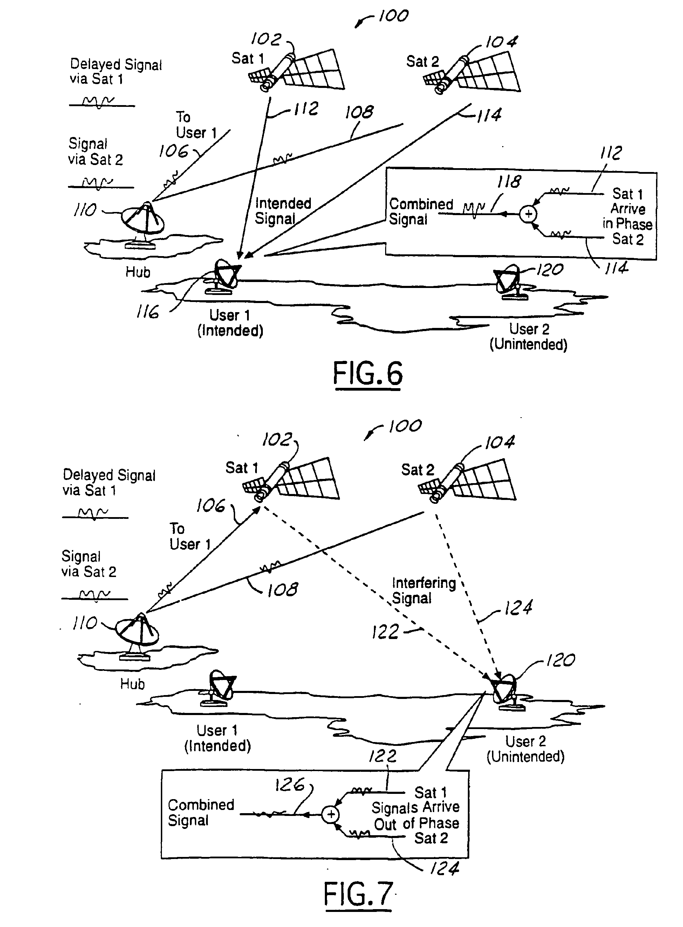

Figure 6 illustrates a multi-platform communication system 100 with improved frequency reuse efficiency in accordance with a preferred embodiment of the present invention. In particular, the system illustrated in Figure 6 uses CDMA coding to subdivide the frequency resource among the various users. The system 100 enables a plurality of transponders 102, 104 to receive signals 106, 108 from the ground hub 110 and to transmit the signals 112, 114 at the same frequency with reduced interference to the intended user 116 from signals intended for other users. This is achieved by synchronizing the transmitted signals at the hub in such a way that the intended user 116 will receive all of the signals 112, 114 synchronously and completely in phase.

Based on the distances from the hub 110, to the various transponders 102, 104 and the distances between the transponders 102, 104 and the intended user 116, the appropriate compensating time delays are calculated and injected into each forward link message at the hub such that the intended user will coherently receive a combined signal from all the transponders as generally indicated at 118. The forward link to the intended user 116 follows the sequence of the hub 110 to the first transponder 102 to the user 116 (hub → trans 1 → user 1) and also from the hub 110 to the second transponder 104 to the user 116 (hub → trans 2 → user 1). Using the correct time delay on each forward link, all intended signals 112, 114 will arrive at the intended user 116 in phase. Conversely, the same signals intended for the intended user 116 will arrive out of phase at a non-intended user 120 and all other non-intended users in the area. This is shown in Figure 7, which is described below.

Figure 7, illustrates the operation of the system of Figure 6 with respect to the non-intended user 120. The distance between the hub 116 and the first transponder 102 and the distance between the first transponder 102 and the non-intended user 120 (hub → trans 1 → user 2) and the distance between the hub 116 and the second transponder 104 and the distance between the second transponder 104 and the non-intended user 120 (hub → trans 2 → user 2) are different in this case, even after compensation by the hub. Because of the distance differences, the signals 122, 124 will arrive at the non-intended user 120 at different times and out-of-phase. The combined signal 126 will thus appear as noise and can be rejected as such by the terminal of the non-intended user 120.

It should be understood that the transponders 102, 104 can be part of any type of wireless communication system or can even be selected from several such systems. For example, while a space based system using satellites is illustrated, regional and national tower-based cellular networks for fixed and mobile communications may also be utilized. Additionally, any high altitude platform system, such as manned/unmanned airships, balloons, or airplanes may also be utilized. Further, while only two transponders are illustrated, an unlimited number of transponders may be utilized. Moreover, while the multiple transponders are shown as being part of a unitary system, any combination of transponders can be used to transmit signals in accordance with the present invention. For example, a signal may be transmitted to a user through both a space-based system and a high altitude platform system. Finally, different sets of transponders may be used to communicate with different users. These various sets may overlap in whole, in part or not at all.

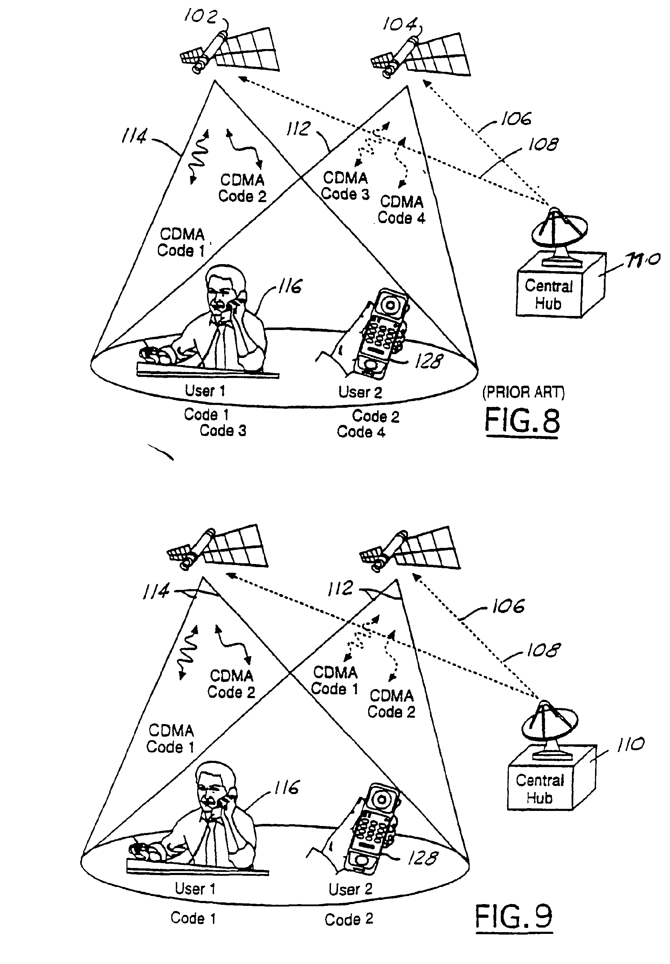

As is known, in conventional CDMA single transponder systems, unique CDMA codes are assigned to each user to avoid interference. Similarly, in multi-transponder systems, when two or more transponders are serving the same geographical location, unique CDMA codes must be used to distinguish the various signals and to avoid interference. For example, as shown in Figure 8, which illustrates a conventional CDMA multi-transponder system, user 116 must use different codes for signals 112, 114 received from the two different transponders 102, 104. Thus, two distinct codes, "code 1" and "code 3" are assigned to the same user 116 in this example, with "code 1" being assigned to signal 112 and "code 3" being assigned to signal 114. If both transponders 102, 104 were to transmit at "code 1", the two received signals 112, 114 would interfere with each other and the terminal of the user 116 would not be able to decode the signals correctly. Two additional codes must be assigned to each additional user, such as user 128 who is assigned codes 2 and 4.

The various CDMA codes for co-located users can be synchronous or asynchronous. A synchronous orthogonal code gives an advantage of about 15 dB or better over asynchronous CDMA codes. For multiple platforms, it is hard to synchronize CDMA codes among users. Thus, for the disclosed multi-platform system, asynchronous CDMA communication is assumed. Although multiple transponder nodes increase the system availability and total power resource, it under-utilizes the system's full potential, because there are only a finite number of codes available due to the finite bandwidth available to a system. Thus, the total bandwidth limits the number of users the system can serve and the system is unable to fully utilize the power and capacity it was designed to handle.

In the preferred embodiment, the system 100 is an asynchronous CDMA system that utilizes imbedded time delays as described in co-pending US-patent application Serial No. 09/550,505 , filed April 17, 2000 and entitled "Coherent Synchronization of Code Division Multiple Access Signals". In accordance with the preferred system, the signals 112, 114 from each transponder 102, 104 will arrive completely in-phase because appropriate time delays are pre-determined and applied to the signals 112, 114 at the central hub 110, as shown in Figure 9. It should be understood that other time delay methods can also be utilized.

As shown, the first user 116 receives signals 112 from each of the transponders 102, 104 using the same code ("code 1"). Similarly, the second user 128 receives signals 114 from each of the transponders 102, 104 using the same code ("code 2"). The central hub 110 determines the time delay between the users and the hub for signals transmitted or received via each transponder and inserts appropriate delays to equalize the total delay via each transponder. Thus, the intended signals from different transponders will all arrive at the intended user in-phase, while non-intended signals will arrive out of phase.

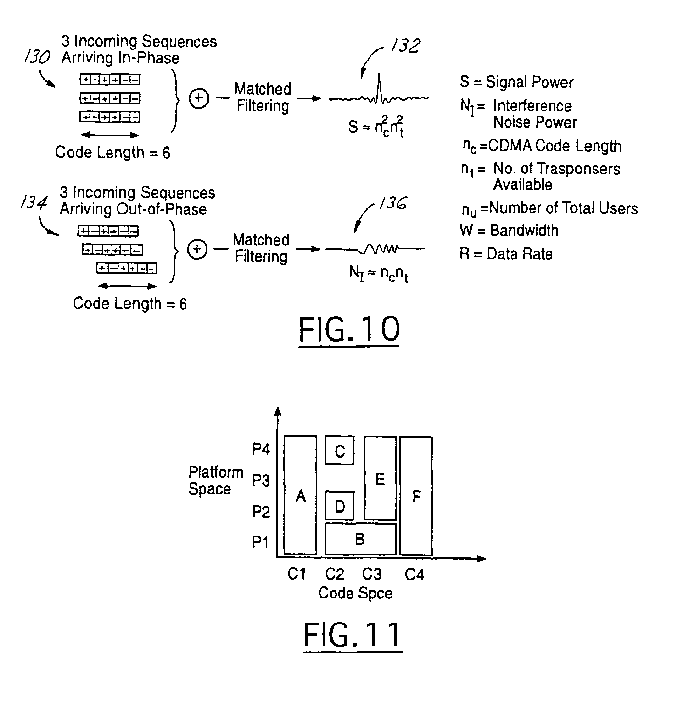

Figure 10 illustrates the summation and matched-filtering of signals at a user's terminal in accordance with the present invention. The CDMA matched-filtering of the total signal received from all the transponders at the terminal produces greater signal strength when there are multiple satellites. As discussed above, CDMA signals that are not intended for the user will appear as noise and can be suppressed. Thus, the same CDMA code can be reused under certain restrictions.

Referring to Figure 10, reference number 130 generally indicates three incoming sequences of information that are arriving in-phase. Each of the signals in this example has a code length of six and the signals are match-filtered to form a signal which is generally represented by 132 and the signal strength out of the matched filter is determined according to the equation

$$S \approx n_c^2 \, n_t^2$$

The reference number 134 generally indicates three incoming sequences that are arriving out-of-phase. In this example, each of the signals has a code length of six; the signals are match-filtered and appear as noise as generally represented by 136. The interference or noise power is expressed according to the equation

$$N_I \approx n_c \, n_t$$

It has been determined that the signal-to-noise ratio for a typical user is governed by the following equation:

$$\left( \frac{S}{N_I} \right)_{CT} \approx \frac{n_c n_t}{n_u - 1} \qquad \qquad \text{Equation 1}$$

where S = Signal Power;
$N_I$ = Interference Noise Power;
$n_c$ = CDMA Code Length;
$n_t$ = No. of Transponders; and
$n_u$ = No. of Total Users.

It has further been determined that as long as the users are sufficiently far separated, the same CDMA code can be re-used without significantly degrading the signal-to-noise ratio. The system capacity of the disclosed system is thus proportional to $n_c$ and $n_t$.

In accordance with a preferred embodiment of the present invention, a novel resource allocation technique for the multi-platform communication system 10 is disclosed. As discussed below, the system 10 consists of a plurality of transponding platforms or nodes, examples of which are set forth above, that work coherently and cooperatively to achieve total system capacity that is proportional to the number of platforms ($n_t$) and the number of code choices ($n_c$), which is related to the total communication bandwidth.

As is known, the key resources of any communication system are power and bandwidth. In the case of a system employing CDMA, the bandwidth resource is related to the number of available codes. Alternatively, for a system employing TDMA, time slots play an analogous role. Conventional systems are typically either power limited or bandwidth limited, but seldom both. The resource allocation is usually based on dynamic allocation of power (for a power limited system) or bandwidth (for a bandwidth limited system). In accordance with the disclosed system, the bandwidth resource will be referred to herein as the system resource which may include code or time in cases of multiple access applications.

The preferred system 10 utilizes a resource allocation technique with three dimensions: bandwidth, the number of platforms, and the power available per platform. Accordingly, a technique is disclosed that utilizes Linear Programming or other similar resource allocation concepts to dynamically optimize the usage of the system resources during operation and maximize the total monetary return per capital.

The following parameters are relevant to the resource allocation system 10 of the preferred embodiment:

$B$      Total effective bandwidth including reuse.
$b_i$      Bandwidth used by user $i$.
$n_t$      Number of platforms in the system.
$n_u$      Number of users served by the system.
$N_u$      Number of users requesting to be served by the system.
$p_{ij}$      Power provided by platform $j$ for user $i$.
$P_j$      Power available at *platform j* for all users.
$q_i$      Power required by user $i$ to close the communication link.
$x_i$      Profit (revenue minus cost) rate when user $i$ is served.
$x$      Total profit rate of the system.
$\delta_i$      1 if user $i$ is served by the system; 0 otherwise.
$\delta_{ij}$      1 if user $i$ is served by platform $j$; 0 otherwise.

The total number of users served by the system at any arbitrary moment can be determined as follows:

$$n_u = \sum_{i=1}^{Nu} \delta_i$$

With a system having bandwidth limitations, the system resources are typically allocated in accordance with the following equation:

$$\sum_{i=1}^{Nu} \delta_i b_i \leq B$$

Conversely, with a system having power limitations, the system resources are typically allocated in accordance with the following equations:

$$\sum_{i=1}^{Nu} \delta_i P_{ij} \leq P_j$$

$$\sum_{j=1}^{n_t} P_{ij} = q_i$$

With both these systems the resources are allocated with the intention of maximizing the number of users served by the system ($n_u$).

In accordance with the preferred resource allocation method, the platform space is an independent dimension. Therefore, the platform power resource can be calculated as follows:

$$\sum_{i=1}^{Nu} \delta_{ij} P_{ij} \leq P_j$$

$$\sum_{j=l}^{n_i} \delta_{ij} P_{ij} = q_i$$

The usage indicator $\delta_{ij}$ is used to describe this new degree of freedom and is mathematically related to the old usage indicator as follows:

$$\delta_i = \prod_{j=1}^{n_i} \delta_{ij}$$

In accordance with the preferred embodiment, a profit value is defined based on the user type. The profit value can depend on factors such as revenue or other monetary amounts. Additionally, the profit value can depend upon a variety of other factors or criteria stored in the central hub and associated with each of the different user types. These factors or criteria allow the system to distribute or allocate resources between the various different types of users.

For example, users that request different levels of service may be treated differently. If a user is paying a premium for guaranteed service, the system will assign that user a profit value such that the system will allocate resources preferentially to that user over another user who is only paying for service on a conditional basis. Further, the user types can also be distinguished depending upon the features they choose, such as voice or data.

The disclosed method preferably optimizes the profit value, which is also referred to as the utility value. The total profit/utility value of the disclosed system is calculated according to the following equation:

$$x = \sum_{i=1}^{N_u} \delta_i x_i$$

For the disclosed multi-platform system, the total profit/utility of the system (x) is preferably maximized in accordance with the following constraints jointly and dynamically:

$$\sum_{i=1}^{Nu} \delta_{ij} P_{ij} \le P_j$$

$$\delta_i = \prod_{j=1}^{n_i} \delta_{ij}$$

$$\sum_{i=1}^{Nu} \delta_i b_i \le B$$

It is assumed that the same bandwidth or code space is used by all platforms to provide service to any user. In the preferred embodiment, a CDMA system is utilized, such as discussed above. Other systems such as FDMA/TDMA systems can also be utilized, however the bandwidth resource allocation can be more complicated. The disclosed resource allocation technique provides better utilization of resources, allows flexible response to market demand changes and maximizes the total profit return.

In order to describe the operation of the disclosed resource allocation technique, an exemplary multi-platform system consisting of four platforms ($P_1$, $P_2$, $P_3$, $P_4$) and four codes ($C_1$,$C_2$,$C_3$,$C_4$) is disclosed and shown in Figure 11. As shown in Figure 11, which is merely for illustration purposes, the disclosed system 10 is not limited by either the size of the platform space or the size of the code space above. The diagram includes a plurality of individual resource cells, with each individual resource cell being associated with a particular platform and a particular code. The number of individual resource cells is equal to the number of platforms multiplied by the number of codes.

Thus, in Figure 11, sixteen individual resource cells exist with the first cell being located in the diagram at the coordinate position identified by ($P_1$,$C_1$) and the last cell being located in the diagram at the coordinate position identified by the ($P_4$,$C_4$). The identification of the other cells will be known and understood by those of skill in the art.

## Claims

1. A method for allocating system resources in a multi-platform communication system (10; 100), comprising the steps of:

   providing a plurality of individual transponding nodes (16; 102, 104);
   providing a plurality of mobile users operating mobile terminals (18; 116, 128);
   establishing a link (20, 24; 40, 42) between each of said plurality of mobile users (18; 116, 128) and a ground hub (12; 110) through one or more of a plurality of the transponding nodes (16; 102, 104);
   processing a plurality of local mobile user signals (28) at the ground hub (12; 110) to compensate for differential propagation delays to any one of a plurality of remote mobile users (18; 116, 128);
   assigning each of said plurality of remote mobile users (18; 116, 128) a profit value, which is dependent upon certain predetermined user criteria;
   assigning each of said plurality of remote mobile users (18; 116, 128) one or more resource cells in platform-code space depending upon service requirements of each of said plurality of remote mobile users (18; 116, 128);
   wherein each resource cell assigned to a particular user (18; 116, 128) enables him to transmit signals (28; 24; 42) to or from the hub (12; 110) through a particular one of said transponder nodes (16; 102, 104) and to use a particular code.

2. The method of claim 1, **characterized in that** each of said plurality of individual transponding nodes (16; 102, 104) is independently selected from one of the following system types: a space-based system, a high altitude platform system, or a tower based cellular network.

3. The method of claim 1, further **characterized by**:

   assigning each of said plurality of mobile users (18; 116, 128) one or more of said resource cells, which are each associated with a particular one of said plurality of transponding nodes (16; 102, 104) and a particular one of a plurality of available codes.

4. The method of claim 2, **characterized by** said high altitude platform system being comprised of a plurality of manned/unmanned airships.

5. The method of claim 2, **characterized by** said high altitude platform system being comprised of a plurality of high altitude balloons.

6. The method of any of claims 1 to 5, **characterized in that** said system utilizes a TDMA technique.

7. The method of any of claims 1 to 5, **characterized in that** said system utilizes a FDMA technique.

8. The method of any of claims 1 to 3, **characterized by** further comprising:

   determining a total profit/utility value for the system (10; 100) based partly on said assigned user profit value.

9. The method of claim 8, **characterized in that** said total profit/utility value is maximized according to the following constraints:

$$\sum_{i=1}^{Nu} \delta_{ij} P_{ij} \leq P_j$$

$$\delta_i = \prod_{j=1}^{n_1} \delta_{ij}$$

$$\sum_{i=1}^{Nu} \delta_i b_i \leq B$$

10. A mobile wireless communication system (10; 100) for a variety of different mobile user types, comprising
a plurality of individual transponding nodes (16; 102, 104);
a plurality of individual resource cells each associated with a particular one of said plurality of individual transponding nodes (16; 102, 104) and a particular one of a plurality of available codes;
a plurality of mobile terminals (18; 116, 128), each of which is operated by a mobile user and assigned to operate in one or more of said plurality of individual resource cells;
a profit/utility value assigned to each of said plurality of mobile terminals (18; 116, 128); and
a central hub (12; 110) being adapted for establishing links (20, 24; 40, 42; 106, 108, 112, 114) with one or more of said plurality of mobile terminals (18; 116, 128), for assigning one or more of said resource cells to each of said plurality of mobile terminals (18; 116, 128), for processing a plurality of local user signals (28) at the ground hub to compensate for differential propagation delays to any one of a plurality of remote mobile users (18; 116, 128), and for assigning said profit/utility value to each of said plurality of mobile terminals (18; 116, 128).

11. The system of claim 10, **characterized in that** said central hub (12; 110) establishes links (20, 24; 40, 42; 106, 108, 112, 114) to said mobile users (18; 116) through one or more of said plurality of transponding nodes (16; 102, 104) wherein the specific transponding node (16; 102, 104) and code used to complete each of said links (20, 24; 40, 42; 106, 108, 112, 114) are determined by said resource cells assigned to said mobile user (18; 116, 128).

12. The system of claim 10 or 11, **characterized in that** said central hub (12; 110) pre-processes signals (24) for forward link (24, 20) transmission such that they are radiated with compensating time delays to an intended one (116) of said plurality of mobile users (18; 116, 120; 128) who coherently receives all such signals (20, 112, 114) intended for him; and
wherein said central hub (12; 110) post-processes received signals (28; 42) to introduce compensating time delays such that all such signals received from a particular remote mobile user (18; 116) may be coherently processed together.

13. The system of any of claims 10 to 12, **characterized by** each of said plurality of individual transponding nodes (16; 102, 104) being independently selected from one of the following system types: a space-based system, a high altitude platform system, or a tower based cellular network.

14. The system of claim 13, **characterized by** said high altitude platform system being comprised of a plurality of manned/unmanned airships.

15. The system of claim 13, **characterized by** said high altitude platform system being comprised of a plurality of high altitude balloons.

16. The system of any of claims 10 to 15, **characterized by** the system profitability being maximized by giving system priority to users (18; 116, 128) having a preselected profit value.

17. The system of claim 10, **characterized in that** power to a particular one of said plurality of mobile terminals (18;

116, 128) is increased by increasing the number of resource cells assigned to said particular mobile user (18; 116, 128) and/or by increasing the number of said plurality of platforms (16; 102, 104) assigned to said particular mobile user (18; 116, 128).

18. The system of any of claims 12 to 17, **characterized by** at least one of said plurality of mobile terminals being assigned resource cells in platform-code space for a return link (42, 40) that are different from said resource cells in platform-code space assigned for said forward link (24, 20).

**Patentansprüche**

1. Verfahren zum Zuweisen von Systemressourcen in einem Kommunikationssystem (10; 100) mit mehreren Plattformen, das die folgenden Schritte aufweist:

Vorsehen einer Vielzahl von individuellen Transponderknotenpunkten (16; 102, 104);
Vorsehen einer Vielzahl von Mobilnutzern, die mobile Anschlüsse (18; 116, 128) betreiben;
Errichten einer Verbindung (20, 24; 40, 42) zwischen jedem der Vielzahl der Mobilnutzer (18; 116, 128) und einem Hub am Boden (12; 110) durch einen oder mehrere der Vielzahl der Transponderknotenpunkte (16; 102, 104);
Verarbeiten einer Vielzahl von lokalen Mobilnutzersignalen (28) beim Hub am Boden (12; 110), um differenzielle Ausbreitungsverzögerungen zu irgendeinem Nutzer einer Vielzahl von entfernten Mobilnutzern (18; 116, 128) zu kompensieren;
jedem der Vielzahl von entfernten Mobilnutzern (18; 116, 128) einen Profitwert zuordnen, der von bestimmten vorbestimmten Benutzerkriterien abhängt;
eine oder mehrere Ressourcenzellen jedem der Vielzahl von entfernten Mobilnutzern (18; 116, 128) im Plattform-Coderaum in Abhängigkeit von Service-Anforderungen von jedem der Vielzahl von entfernten mobilen Nutzern (18; 116, 128) zuordnen;
wobei jede Ressourcenzelle, die einem bestimmten Nutzer (18; 116, 128) zugeordnet ist, dem Nutzer Signale (28; 24; 42) zum und vom Hub (12; 110) durch einen bestimmten Transponderknotenpunkt der Transponderknotenpunkte (16; 102, 104) zu übertragen und einem bestimmten Code zu vervvenden.

2. Verfahren nach Anspruch 1, **dadurch gekennzeichnet, dass** jeder Transponderknotenpunkt der Vielzahl von individuellen Transponderknotenpunkten (16; 102, 104) unabhängig aus einem der folgenden Systemtypen ausgewählt ist: Satellitensystem, Hochhöhen-Plattformsystem oder Mast-basiertes zelluläres Netzwerk.

3. Verfahren nach Anspruch 1, das des Weiteren **gekennzeichnet ist durch**:

jedem der Vielzahl von Mobilnutzern (18; 116, 128) eine oder mehrere der Ressourcenzellen zuordnen, die jeweils mit einem bestimmten Transponderknotenpunkt der Vielzahl von Transponderknoten (16; 102, 104) und mit einem bestimmten Code einer Vielzahl zur Verfügung stehender Codes verknüpft ist.

4. Verfahren nach Anspruch 2, **dadurch gekennzeichnet, dass** das Hochhöhen-Plattformsystem eine Vielzahl von bemannten oder unbemannten Luftschiffen aufweist.

5. Verfahren nach Anspruch 2, **dadurch gekennzeichnet, dass** das Hochhöhen-Plattformsystem eine Vielzahl von Hochhöhenballons aufweist.

6. Verfahren nach einem der Ansprüche 1 bis 5, **dadurch gekennzeichnet, dass** das System ein TDMA-Verfahren verwendet.

7. Verfahren nach einem der Ansprüche 1 bis 5, **dadurch gekennzeichnet, dass** das System ein FDMA-Verfahren verwendet.

8. Verfahren nach einem der Ansprüche 1 bis 3, **dadurch gekennzeichnet, dass** es des Weiteren aufweist:

Bestimmen eines Gesamtprofit/Brauchbarkeitswerts für das System (10; 100), teilweise basierend auf dem zugeordneten Nutzerprofitwert.

9.  Verfahren nach Anspruch 8, **dadurch gekennzeichnet, dass** der Gesamtprofit/Brauchbarkeitswert unter den nachfolgenden Bedingungen maximiert wird:

$$\sum_{i=1}^{Nu} \delta_{ij} P_{ij} \le P_j$$

$$\delta_i = \prod_{j=1}^{n_1} \delta_{ij}$$

$$\sum_{i=1}^{Nu} \delta_i b_i \le B$$

10. Drahtloses Mobilkommunikationssystem (10; 100) für eine Vielzahl unterschiedlicher Mobilnutzertypen, das aufweist:

    eine Vielzahl von individuellen Transponderknoten (16; 102, 104);
    eine Vielzahl individueller Ressourcenzellen, wobei jede der Ressourcenzellen mit einem bestimmten individuellen Transponderknotenpunkt der Vielzahl von individuellen Transponderknotenpunkten (16; 102, 104) und einem bestimmten zur Verfügung stehenden Code einer Vielzahl von zur Verfügung stehender Codes verknüpft ist;
    eine Vielzahl mobiler Anschlüsse (18; 116, 128), von denen jeder durch einen Mobilnutzer betrieben wird und von denen jeder zugeordnet ist, in einer oder mehreren der Vielzahl von individuellen Ressourcenzellen betrieben zu werden;
    einen Profit/Brauchbarkeitswert, der jedem der Vielzahl von Mobilanschlüssen (18; 116, 128) zugewiesen ist; und
    einen zentralen Hub (12; 110), der zum Errichten von Verbindungen (20, 24; 40, 42; 106, 108, 112, 114) zu einem oder mehreren der Vielzahl von Mobilanschlüssen (18; 116, 128) zugeordnet ist, um eine oder mehrere der Ressourcenzellen an jeden der Vielzahl von Mobilanschlüssen (18; 116, 128) zum Verarbeiten einer Vielzahl von lokalen Nutzersignalen (28) beim Hub am Boden zuzuordnen, um differenzielle Ausbreitungsverzögerungen zu irgendeinem einer Vielzahl von entfernten Mobilnutzern (18; 116, 128) zu kompensieren, und zum Zuordnen des Profit/Brauchbarkeitswerts zu jedem der Vielzahl von Mobilanschlüssen (18; 116, 128).

11. System nach Anspruch 10, **dadurch gekennzeichnet, dass** der zentrale Hub (12; 110) Verbindungen (20, 24; 40, 42; 106, 108, 112, 114) zu den Mobilnutzern (18; 116) durch einen oder mehrere der Vielzahl von Transponderknotenpunkten (16; 102, 104) errichtet, wobei der spezifische Transponderknotenpunkt (16; 102, 104) und ein zum Fertigstellen von jeder der Verbindungen (20, 24; 40, 42; 106, 108, 112, 114) verwendeten Code durch die Ressourcenzellen bestimmt sind, die dem Mobilnutzer (18; 116, 128) zugeordnet sind.

12. Verfahren nach Anspruch 10 oder 11, **dadurch gekennzeichnet, dass** der zentrale Hub (12; 110) Signale (24) für eine Aufwärtsverbindungsübertragung (24, 20) derart vorverarbeitet, dass sie mit kompensierenden Zeitverzögerungen an einen gewollten Mobilnutzer der Vielzahl von Mobilnutzern (18; 116, 120; 128) ausgestrahlt werden, der kohärent all die Signale (20; 112, 114) empfängt, die für ihn gedacht sind; und
    wobei der zentrale Hub (12; 110) empfangene Signale (28; 42) nachbearbeitet, um kompensierende Zeitverzögerungen einzufügen, so dass all die Signale, die von einem bestimmten entfernten Mobilnutzer (18; 116) empfangen werden, gemeinsam kohärent verarbeitet werden können.

13. System nach einem der Ansprüche 10 bis 12, **dadurch gekennzeichnet, dass** jeder der Vielzahl von individuellen Transponderknotenpunkten (16; 102, 104) unabhängig aus einem der nachfolgenden Systemtypen ausgewählt ist: Satellitensystem, Hochhöhen-Plattformsystem oder Mast-basiertes zelluläres Netzwerk.

14. System nach Anspruch 13, **dadurch gekennzeichnet, dass** das Hochhöhen-Plattformsystem eine Vielzahl bemannter oder unbemannter Luftschiffe aufweist.

**15.** Verfahren nach Anspruch 13, **dadurch gekennzeichnet, dass** das Hochhöhen-Plattformsystem eine Vielzahl von Hochhöhenballons aufweist.

**16.** Verfahren nach einem der Ansprüche 10 bis 15, **dadurch gekennzeichnet, dass** die Systemprofitabilität durch Vergeben einer Systempriorität an Nutzer (18; 116, 128) maximiert wird, die einen vorausgewählten Profitwert haben.

**17.** System nach Anspruch 10, **dadurch gekennzeichnet, dass** eine Leistung für einen bestimmten Mobilanschluss der Vielzahl von mobilen Anschlüssen (18; 116, 128) durch Erhöhen der Anzahl von Ressourcenzellen erhöht wird, die dem bestimmten Mobilnutzer (18; 116, 128) zugeordnet sind, und durch Erhöhen der Anzahl der Vielzahl von Plattformen (16; 102, 104) erhöht wird, die dem bestimmten Mobilnutzer (18; 116, 128) zugeordnet sind.

**18.** System nach einem der Ansprüche 12 bis 17, **dadurch gekennzeichnet, dass** zumindest ein Nutzeranschluss der Vielzahl von Nutzeranschlüssen Ressourcenzellen im Plattformcode-Raum für eine Rückverbindung (42, 40) zugeordnet bekommt, die sich von den Ressourcenzellen in dem Plattformcode-Raum unterscheiden, der den Aufwärtsverbindungen (24, 20) zugeordnet ist.


## Revendications

**1.** Procédé d'affectation de ressources système dans un système de communication multiplateforme (10 ; 100), le procède comprenant les étapes consistant à :

procurer une pluralité de noeuds répondeurs individuels (16 ; 102 ; 104) ;
procurer une pluralité d'utilisateurs mobiles qui exploitent des terminaux mobiles (18 ; 116, 128) ;
établir une liaison (20, 24 ; 40, 42) entre chacun de ladite pluralité d'utilisateurs mobiles (18 ; 116, 128) et une station pivot au sol (12 ; 110) en passant par au moins un parmi une pluralité des noeuds répondeurs (16 ; 102, 104) ;
procéder au traitement d'une pluralité de signaux d'utilisateurs mobiles locaux (28) au niveau de la station pivot au sol (12 ; 110) dans le but de compenser des retards de propagation différents vers l'un quelconque parmi une pluralité d'utilisateurs mobiles distants (18 ; 116, 128);
affecter à chacun de ladite pluralité d'utilisateurs mobiles distants (18 ; 116, 128) une valeur de bénéfice qui est fonction de certains critères d'utilisateur prédéfinis ;
affecter à chacun de ladite pluralité d'utilisateurs mobiles distants (18 ; 116, 128) au moins une cellule de ressources dans un espace plateforme-code en fonction des besoins en service de chacun de ladite pluralité d'utilisateurs mobiles distants (18 ; 116, 128);
chacune desquelles cellules de ressources affectée à un utilisateur particulier (18 ; 116, 128) permettant à celui-ci de transmettre des signaux (28 ; 24 ; 42) à destination ou en provenance de la station pivot (12 ; 110) en passant par un noeud particulier parmi lesdits noeuds répondeurs (16 ; 102, 104) et d'utiliser un code particulier.

**2.** Procédé selon la revendication 1, **caractérisé en ce que** chacun de ladite pluralité de noeuds répondeurs individuels (16 ; 102, 104) est sélectionné indépendamment parmi un des types de système suivants : un système spatial, un système de plateformes stratosphériques ou un réseau cellulaire à pylônes.

**3.** Procédé selon la revendication 1, **caractérisé en outre en ce qu'**il comprend l'étape consistant à :

affecter à chacun de ladite pluralité d'utilisateurs mobiles (18 ; 116, 128) au moins une desdites cellules de ressources, chacune associée à un noeud particulier parmi ladite pluralité de noeuds répondeurs (16 ; 102, 104) et à un code particulier parmi une pluralité de codes disponibles.

**4.** Procédé selon la revendication 2, **caractérisé en ce que** ledit système de plateformes stratosphériques est composé d'une pluralité de dirigeables pilotés/sans pilote.

**5.** Procédé selon la revendication 2, **caractérisé en ce que** ledit système de plateformes stratosphériques est composé d'une pluralité de ballons stratosphériques.

**6.** Procédé selon l'une quelconque des revendications 1 à 5, **caractérisé en ce que** ledit système fait appel à une technique TDMA.

**7.** Procédé selon l'une quelconque des revendications 1 à 5, **caractérisé en ce que** ledit système fait appel à une technique FDMA.

**8.** Procédé selon l'une quelconque des revendications 1 à 3, **caractérisé en ce qu'**il comprend en outre l'étape consistant à :

établir une valeur de bénéfice/utilité totale pour le système (10 ; 100) basée en partie sur ladite valeur de bénéfice d'utilisateur affectée.

**9.** Procédé selon la revendication 8, **caractérisé en ce que** ladite valeur de bénéfice/utilité totale est maximisée compte tenu des contraintes suivantes :

$$\sum_{i=1}^{N_j} \delta_{ij} P_{ij} \leq P_j$$

$$\delta_i = \prod_{j=1}^{n_i} \delta_{ij}$$

$$\sum_{i=1}^{N_u} \delta_i b_i \leq B$$

**10.** Système de communication sans 61 mobile (10 ; 100) pour divers types d'utilisateurs mobiles différents, le système comprenant :

une pluralité de noeuds répondeurs individuels (16 ; 102, 104) ;
une pluralité de cellules de ressources individuelles associées chacune à un noeud particulier parmi ladite pluralité de noeuds répondeurs individuels (16 ; 102, 104) et à un code particulier parmi une pluralité de codes disponibles ;
une pluralité de terminaux mobiles (18 ; 116, 128) dont chacun est exploité par un utilisateur mobile et affecté pour être exploité dans au moins une parmi ladite pluralité de cellules de ressources individuelles ;
une valeur de bénéfice/utilité affectée à chacun de ladite pluralité de terminaux mobiles (18 ; 116, 128) ; et
une station pivot centrale (12 ; 110) adaptée à établir des liaisons (20, 24 ; 40, 42 ; 106, 108, 112, 114) avec au moins un parmi ladite pluralité de terminaux mobiles (18 ; 116, 128), à affecter au moins une parmi lesdites cellules de ressources à chacun de ladite pluralité de terminaux mobiles (18 ; 116, 128), à procéder au traitement d'une pluralité de signaux d'utilisateurs locaux (28) au niveau de la station pivot centrale dans le but de compenser des retards de propagation différents vers l'un quelconque parmi une pluralité d'utilisateurs mobiles distants (18 ; 116, 128), et à affecter ladite valeur de bénéfice/utilité à chacun de ladite pluralité de terminaux mobiles (18 ; 116, 128).

**11.** Système selon la revendication 10, **caractérisé en ce que** ladite station pivot centrale (12 ; 110) établit des liaisons (20, 24 ; 40, 42 ; 106, 108, 112, 114) vers lesdits utilisateurs mobiles (18 ; 116) en passant par au moins un parmi ladite pluralité de noeuds répondeurs (16 ; 102, 104), lesquels noeud répondeur (16 ; 102, 104) et code particuliers utilisés pour achever l'établissement de chacune desdites liaisons (20, 24 ; 40, 42 ; 106, 108, 112, 114) sont établis par lesdites cellules de ressources affectées auxdits utilisateurs mobiles (18 ; 116, 128).

**12.** Système selon la revendication 10 ou 11, **caractérisé en ce que** ladite station pivot centrale (12 ; 110) procède à un prétraitement de signaux (24) destinés à être transmis dans la liaison aller (24, 20) de manière à ce qu'ils soient rayonnés avec des retards de propagation de compensation vers un utilisateur mobile destinataire (116) parmi ladite pluralité d'utilisateurs mobiles (18 ; 116, 120 ; 128) qui reçoit de façon cohérente tous les signaux (20 ; 112, 114) qui lui sont destinés ; et
laquelle station pivot centrale (12 ; 110) procède à un post-traitement de signaux reçus (28 ; 42) dans le but d'introduire des retards de compensation de manière à ce que tous les signaux reçus d'un utilisateur mobile distant particulier (18 ; 116) puissent simultanément faire l'objet d'un traitement cohérent.

**13.** Système selon l'une quelconque des revendications 10 à 12, **caractérisé en ce que** chacun de ladite pluralité de noeuds répondeurs individuels (16 ; 102, 104) est sélectionné indépendamment parmi un des types de système suivants : un système spatial, un système de plateformes stratosphériques ou un réseau cellulaire à pylônes.

**14.** Système selon la revendication 13, **caractérisé en ce que** ledit système de plateformes stratosphériques est composé d'une pluralité de dirigeables pilotés/sans pilote.

**15.** Système selon la revendication 13, **caractérisé en ce que** ledit système de plateformes stratosphériques est composé d'une pluralité de ballons stratosphériques.

**16.** Système selon l'une quelconque des revendications 10 à 15, **caractérisé en ce que** la rentabilité du système est maximisée en accordant une priorité dans le système aux utilisateurs (18 ; 116, 128) possédant une valeur de bénéfice présélectionnée.

**17.** Système selon la revendication 10, **caractérisé en ce que** la puissance accordée à un terminal mobile particulier parmi ladite pluralité de terminaux mobiles (18 ; 116, 128) est augmentée en augmentant le nombre de cellules de ressources affectées audit utilisateur mobile particulier (18 ; 116, 128) et/ou en augmentant le nombre de ladite pluralité de plateformes (16 ;102, 104) affectées audit utilisateur mobile particulier (18 ; 116, 128).

**18.** Système selon l'une quelconque des revendications 12 à 17, **caractérisé en ce qu'**au moins un parmi ladite pluralité de terminaux mobiles se voit affecter des cellules de ressources dans un espace plateforme-code pour une liaison retour (42, 40) qui sont différentes desdites cellules de ressources dans l'espace plateforme-code affectées pour ladite liaison aller (24, 20).

## FIG.1

## FIG.2

FIG.3

FIG.4

HUB SEGMENT
52

SPACE SEGMENT
54

USER SEGMENT
56

PATH DIFFERENTIAL
USER POSITIONING

PRE-PROCESSING
FWD BEAMFORMING
26

HUB
PROCESSING

POST PROCESSING
RTN BEAMFORMING
44

CALIBRATION & TRACKING

SATELLITES

USERS

16

16

18

18

FIG.5

FIG.6

FIG.7

CDMA Code 2

CDMA Code 3

CDMA Code 4

CDMA Code 1

114

112

106

108

102

104

116

128

Central Hub

110

User 1

Code 1
Code 3

User 2

Code 2
Code 4

(PRIOR ART)

## FIG.8

CDMA Code 2

CDMA Code 1

CDMA Code 2

CDMA Code 1

114

112

106

108

116

128

Central Hub

110

User 1

Code 1

User 2

Code 2

## FIG.9

3 Incoming Sequences
*130* Arriving In-Phase

*132*

Matched Filtering →

Code Length = 6

$S \approx n_c^2 n_t^2$

3 Incoming Sequences
*134* Arriving Out-of-Phase

*136*

Matched Filtering →

Code Length = 6

$N_I \approx n_c n_t$

S = Signal Power

$N_I$ = Interference Noise Power

$n_c$ = CDMA Code Length

$n_t$ = No. of Trasponsers Available

$n_u$ = Number of Total Users

W = Bandwidth

R = Data Rate

## FIG. 10

Platform Space

P4
P3
P2
P1

A   C   E   F
    D
    B

C1   C2   C3   C4
Code Spce

## FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 09271997 B
- US 5867109 A
- US 20906298 A
- US 09550505 A